# EUROPEAN PATENT APPLICATION

(11) **EP 1 553 505 A1**
(43) Date of publication of application: **13.07.2005**
(21) Application number: 03741258.2
(22) Date of filing: 08.07.2003
(51) Int. Cl.: G06F 17/30

(54) **DATA SEARCH DEVICE**

(30) Priority: 08.07.2002 JP 2002199140
(71) Applicant: MATSUSHITA ELECTRIC INDUSTRIAL CO., LTD., Kadoma-shi, Osaka 571-8501 (JP)
(72) Inventor: ISHIGURO, Yasuo, Osaka 565-0874 (JP); ARIKADO, Ryuichi, Osaka 573-0124 (JP); SAITI, Shu, Osaka 536-0012 (JP); AOKI, Kouhei, Osaka 532-0025 (JP)
(74) Representative: Grünecker, Kinkeldey, Stockmair & Schwanhäusser
(86) International application number: PCT/JP2003/008635
(87) International publication number: WO 2004/006129

(57) **Abstract**

A data searching apparatus for searching a database based on a search criterion entered in a corresponding data-entry field by a user. The data searching apparatus includes a search index recording unit 11, and a management data recording unit 13 that are operable to hold field information indicating one or more of a plurality of data-entry fields that correspond one-to-one with a plurality of search categories structuring the database, and a search category obtaining unit 23, a field display instructing unit 24, and a field display unit 43 that are operable to display the one or more data-entry fields indicated by the held field information, and to hide any of the plurality of data-entry fields not indicated by the held field information.

This prevents the searching operations from becoming complicated and troublesome even when the number of search categories is large.

## Description

### Technical Field

The present invention relates to a data searching apparatus that searches for various pieces of data, and particularly relates to a technique for promoting the efficiency of searching operations.

### Background Art

Data searching apparatuses searching for various pieces of data typically receive the user entry of search criteria such as a number and a keyword, and search for data matching the entered number or data including the entered keyword.

As one example, a patent search system employs a large number of search categories. The categories include: Classification by Law (four major industrial property laws: patent, utility model, design, and trademark), International Patent Classification (IPC), FI (File Index developed by the Japanese Patent Office as sub-classifications of the IPC, to be updated at an interval of about one year), F Term (File Forming Term providing more than 200,000 technical classifications, particularly developed for mechanical searching), Application Number, Publication Number, International Application Number, International Publication Number, Unexamined Patent Publication Number, Examined Patent Publication Number, Registration Number, Priority Number, Related Application Number, Number of Appeal, Date of Filing, Date of Publication of Application, Date of Registration, Inventor, Applicant, Right-Holder, Title of the Invention, and Keyword.

The patent information here includes valuable and useful information regarding intellectual property (patent, utility mode, design, and trademark), such as various kinds of gazettes, publications, documents, foreign publications, decision gazettes, and prosecution histories.

There is little problem is caused when a data searching apparatus has only a small number of search categories. Yet, the searching operation becomes more complex and troublesome as the number of categories increases.

For example, if the patent search system displays all of the above listed categories on a screen every time a search is performed, it may take quite a bit of time for the user just to find the right search category, and this can increase a possibility of the user entering a keyword in a wrong data-entry field.

The present invention aims to provide a data searching apparatus, a data searching method, and a program for searching data that do not require complex and troublesome searching operations when performing a database search, even if there are a large number of search categories.

### Disclosure of the Invention

The above object of the present invention can be achieved by a data searching apparatus for searching a database based on a search criterion entered in a corresponding data-entry field by a user, the data searching apparatus including a field information holding unit operable to hold field information indicating one or more of a plurality of data-entry fields that correspond one-to-one with a plurality of search categories structuring the database, and a field display unit operable to display the one or more data-entry fields indicated by the held field information and to hide any of the plurality of data-entry fields not indicated by the held field information.

The above object of the present invention can be achieved by a data searching method for searching a database based on a search criterion entered in a corresponding data-entry field by a user, the data searching method including a field information holding step of holding field information indicating one or more of a plurality of data-entry fields that correspond one-to-one with a plurality of search categories structuring the database, and a field display step of displaying the one or more data-entry fields indicated by the held field information and hiding any of the plurality of data-entry fields not indicated by the held field information.

The above object of the present invention can be achieved by a data searching program for searching a database based on a search criterion entered in a corresponding data-entry field by a user, the data searching program including a field information holding step of holding field information indicating one or more of a plurality of data-entry fields that correspond one-to-one with a plurality of search categories structuring the database, and a field display step of displaying the one or more data-entry fields indicated by the held field information and hiding any of the plurality of data-entry fields not indicated by the held field information.

According to the above apparatus, method, and program, any data-entry field that is not indicated by the field information is hidden, and therefore the complexity in the searching operations can be reduced even when there are a large number of search categories.

Thus, it is possible to improve efficiency in the search operations.

Further, by holding field information for different users with different characteristics such as learning level, it is possible to display data-entry fields based on each user's characteristic. For example, well-selected search categories are displayed for beginners and unspecialized users who do not use the patent search very often, and detailed and specialized search categories are displayed for specialized users who use the patent search often. By this, it is possible for the users to quickly and easily start searching operations that are appropriate to the user's characteristic or the preference.

In addition, because the field information is held, it is possible to display the same data-entry fields that have been previously displayed and used by the same user. For example, when the user starts the searching operations for the first time after a couple months, the user can use the same data-entry fields that the user has used last time, and starts the searching operations without confusion, even if the user does not use the searching apparatus very often.

The above data searching apparatus may further comprise a category accepting unit operable to accept, from the user, a specification of one or more of the plurality of search categories, and an update unit operable to update the held field information, so as to indicate one or more data-entry fields corresponding to the one or more search categories.

According to this, it is possible for the user to freely set the data-entry fields appropriate to the user, because the field information can be registered by accepting the selection of the search categories from the user.

The above data searching apparatus may be such that the field information holding unit is a nonvolatile recording medium, and when the user performs a database search during a period in which the updated field information is held without further update, the field display unit displays the one or more data-entry fields indicated by the updated field information, and hides any of the plurality of data-entry fields not indicated by the updated field information.

According to this, it is possible to improve the efficiency of the searching operation, because the field information is held in the nonvolatile recording medium semipermanently, and the same data-entry fields that are used in the previous search operations are displayed.

The above data searching apparatus may further comprise a category display unit operable to display a list of search categories, a category accepting unit operable to accept, from the user, a selection of one or more search categories from the displayed list of search categories, and an update unit operable to update the held field information based on the accepted selection, when the selection has been accepted.

According to this, it is possible for the user to freely set the data-entry fields appropriate to the user, because the field information can be updated by accepting the selection of the search categories from the user.

The above data searching apparatus may be such that the field display unit updates the displayed data-entry fields immediately when the selection has been accepted.

According to this, the searching operations can be facilitated because it is possible to update the display without delay when the user selection of search categories is accepted.

The above data searching apparatus may further comprise a type display unit operable to display a list of types into which the plurality of search categories are classified, a type accepting unit operable to accept, from the user, a selection of a desired type from the displayed list of types, a category display unit operable to display a list of search categories that are classified as the selected type, when the selection of the type has been accepted, a category accepting unit operable to accept, from the user, a selection of one or more search categories from the displayed list of search categories, and an update unit operable to update the field information based on the accepted selection, when the selection of the search categories has been accepted.

According to this, the complexity in the update operations can be reduced even when there are a large number of search categories, because, in the update operations, the type is first selected and then the update of the field information is performed by accepting the selection from the search categories that are classified under the selected type.

The above data searching apparatus may be such that the field display unit updates the displayed data-entry fields immediately when the selection has been accepted.

According to this, the searching operations can be facilitated because it is possible to update the display without delay when the user selection of search categories is accepted.

The above data searching apparatus may be such that the field information holding unit holds pieces of the field information each corresponding to a different user ID, the apparatus further comprises an ID accepting unit operable to accept a user ID inputted by the user before starting a database search, and the field display unit displays the data-entry fields indicated by one of the pieces of the field information that corresponds to the accepted user ID.

According to this, it is possible to display the data-entry fields appropriate to each user, because the data-entry fields can be displayed for each user.

In addition, the field information is held for each user, and therefore it is possible to display the data-entry fields that are the same as previously displayed for each user.

The above data searching apparatus may be such that the field information holding unit holds pieces of the field information each corresponding to a different search purpose, the apparatus further comprises a search purpose accepting unit operable to accept a search purpose selected by the user before starting a database search, and the field display unit displays the data-entry fields indicated by one of the pieces of the field information that corresponds to the accepted search purpose.

According to this, it is possible to display the data-entry fields appropriate to each search purpose, because the data-entry fields can be displayed for each search purpose.

In addition, the field information is held for each search purpose, and therefore it is possible to display the data-entry fields that are the same as previously displayed for each search purpose.

The above data searching apparatus may be such that the apparatus is for searching a patent publication database, each search purpose corresponds to each phase in patent related procedures, and the search purpose accepting unit includes a search purpose display subunit operable to display a list of search purposes in an order of the corresponding phases in the patent related procedures and a search purpose accepting subunit operable to accept, from the user, a selection of a desired search purpose from the displayed list of search purposes.

According to this, the searching operations can be facilitated, because it is possible to display the list of search purposes in the order and then accept the user selection of the desired search purpose.

The above data searching apparatus may be such that the field information holding unit holds pieces of the field information each corresponding to a different search purpose of a different user ID, the apparatus further comprises an ID/purpose accepting unit operable to accept a user ID and a search purpose respectively inputted and selected by the user before starting a database search, and the field display unit displays the data-entry fields indicated by one of the pieces of the field information that corresponds to the accepted user ID and search purpose.

According to this, it is possible to display the data-entry fields appropriate to each user and each search purpose, because the data-entry fields can be displayed for each user and each search purpose.

In addition, the field information is held for each user and each search purpose, and therefore it is possible to display the data-entry fields that are the same as previously displayed data-entry fields for each search purpose of each user.

The above data searching apparatus may be such that the apparatus is for searching a patent publication database, each search purpose corresponds to each phase in patent related procedures, and the ID/purpose accepting unit includes a search purpose display subunit operable to display a list of search purposes in an order of the corresponding phases in the patent related procedures and a search purpose accepting subunit operable to accept, from the user, a selection of a desired search purpose from the displayed list of search purposes.

According to this, the searching operations can be facilitated, because it is possible to display the list of search purposes in the order and then accept the user selection of the desired search purpose.

### Brief Description Of The Drawings

Fig. 1 schematically illustrates a network including a data searching system according to the preferred embodiment of the present invention.
Fig. 2 illustrates a detailed structure of the data searching system according to the preferred embodiment of the present invention.
Fig. 3 is an example of a type name table that is a list of type names that correspond to search indexes and into which search categories are classified.
Fig. 4 is an example of A (classification) type table that is a search index of search categories classified as A (classification).
Fig. 5 is an example of B (number) type table that is a search index of search categories classified as B (number).
Fig. 6 is an example of C (date) type table that is a search index of search categories classified as C (date).
Fig. 7 is an example of D (name) type table that is a search index of search categories classified as D (name).
Fig. 8 is an example of E (text) type table that is a search index of search categories classified as E (text).
Fig. 9 is an example of a display of patent publications that are recorded in a patent information data recording unit 12.
Fig. 10 illustrates an example of search purpose information that is recorded in a management data recording unit 13.
Fig. 11 illustrates an example of search category information that is recorded in the management data recording unit 13.
Fig. 12 illustrates an example of a screen displayed in a Web browser 40 when a user authentication has been successful.
Fig. 13 illustrates a detailed structure of a search category modification unit 44.
Fig. 14 illustrates an example of a screen displayed in the Web browser 40 when the user selected A (classification).
Fig. 15 illustrates an example of a screen displayed in the Web browser 40 when the user selected B (number).
Fig. 16 illustrates an example of a screen in the Web browser 40 displayed when the user starts a searching operation for the first time in months after the last search.
Fig. 17 is a flowchart showing an operational sequence of searching for a patent publication using the data searching system according to the preferred embodiment of the present invention.

### Best Mode for Carrying Out the Invention

### [Overview]

A data searching system according to the preferred embodiment of the present invention is described as a patent search system that holds search category information, for each user ID and each search purpose, indicating search categories to be displayed on a screen along with respective data-entry fields. The data searching system also displays the search categories and the data-entry fields according to the user ID of a user and the search purpose, and thereby reducing the complexity and trouble in the searching operations even when the number of search categories is large.

### [Structure]

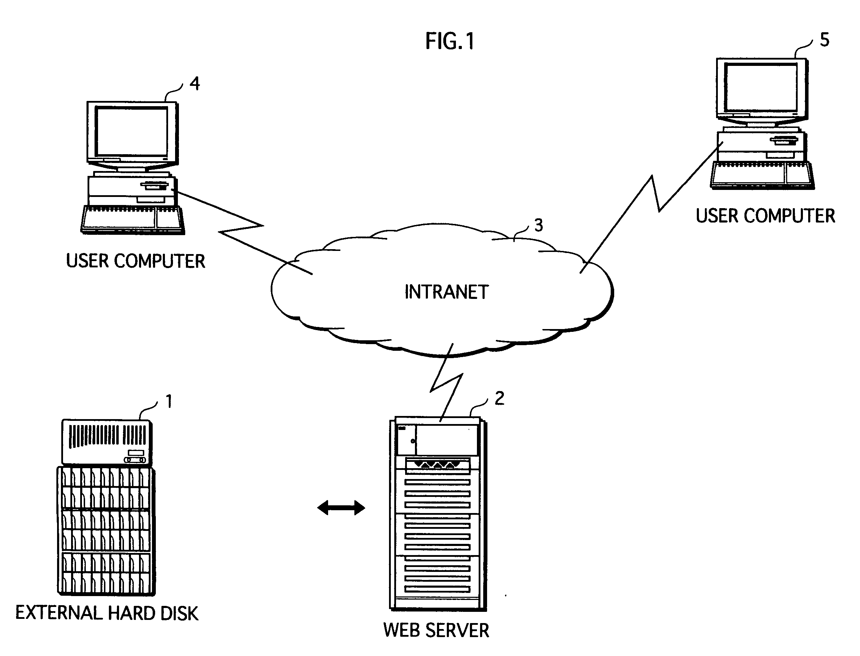

Fig. 1 schematically illustrates a network including the data searching system according to the preferred embodiment of the present invention.

The network shown in Fig. 1 includes an external hard disk 1, a Web server 2, an intranet 3, a user computer 4, and a user computer 5.

The external hard disk 1 records information such as patent information data and search indexes.

The Web server 2 searches the patent information data recorded in the external hard disk 1, based on a search instruction from either the user computer 4 or the user computer 5, and transmits a retrieved piece of patent information data to the sender of the search instruction.

The intranet 3 is a local network in which users in a restricted range such as one company are connected to each other.

The user computer 4 and the user computer 5 are Web browsers used by the user.

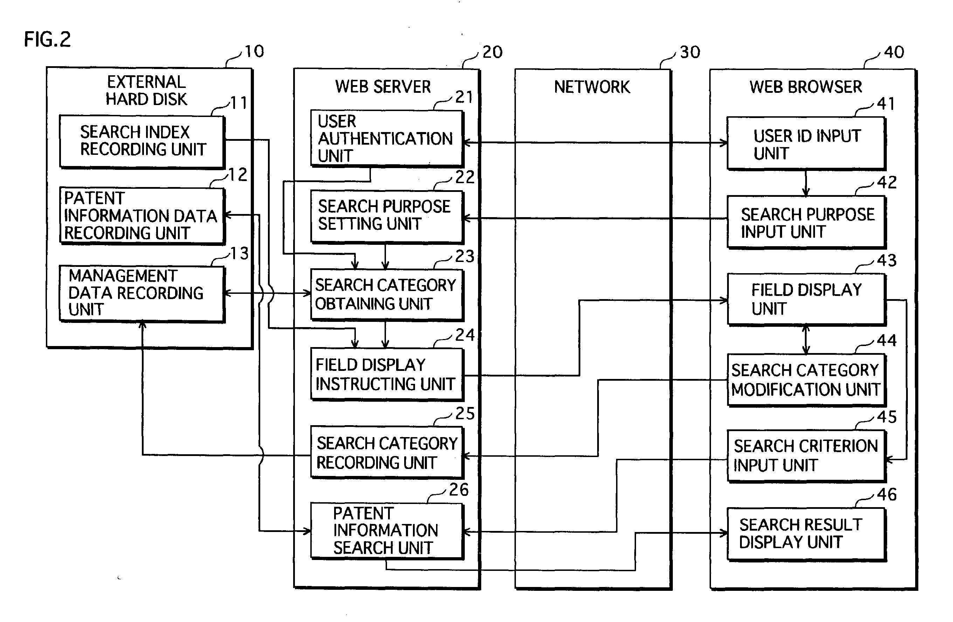

Fig. 2 illustrates a structure of the data searching system according to the preferred embodiment of the present invention in detail.

The data searching system shown in Fig. 2 includes an external hard disk 10, a Web server 20, a network 30, and a Web browser 40.

The external hard disk 10 is a recording device having a nonvolatile recording medium, and is provided with a search index recording unit 11, a patent information data recording unit 12, and a management data recording unit 13.

The Web server 20 includes a user authentication unit 21, a search purpose setting unit 22, a search category obtaining unit 23, a field display instructing unit 24, and a search category recording unit 25.

The network 30 is such as the intranet, and connects the Web server 20 and the Web browser 40 so as to allow communications between the Web servers 20 and the Web browser 40.

The Web browser 40 includes a user ID input unit 41, a search purpose input unit 42, a field display unit 43, a search category modification unit 44, a search criterion input unit 45, and a search result display unit 46.

The search index recording unit 11 records the search indexes.

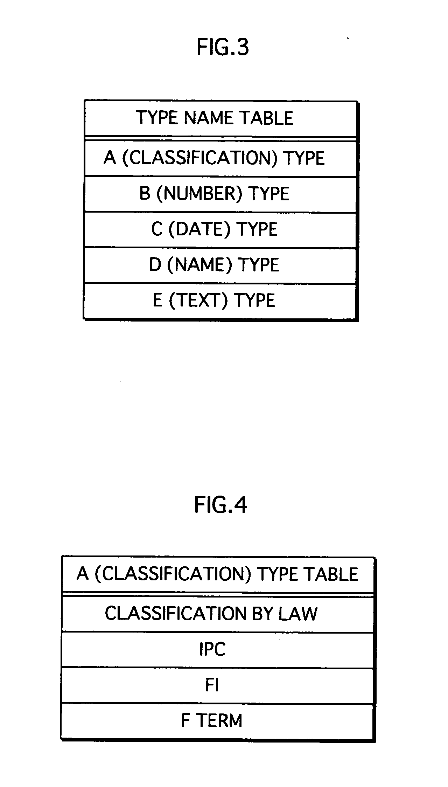

Figs. 3 to 8 illustrate examples of the search indexes recorded in the search index recording unit 11.

Fig. 3 is an example of a type name table that is a list of types to which the search indexes correspond.

As shown in Fig. 3, the search indexes respectively correspond to five types: A (classification), B (number), C (date), D (name), and E (text) . Text data of the names of the five types are recorded in the type name table.

Fig. 4 is an example of an A (classification) type table, which is a search index of categories that are classified as A (classification).

As shown in Fig. 4, Classification by Law, IPC, FI, and F Term are classified under the search index A (classification), and text data of category names are recorded in the A (classification) type table.

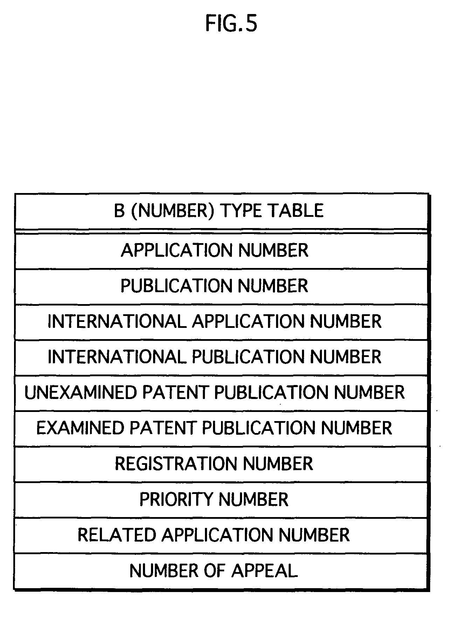

Fig. 5 is an example of a B (number) type table, which is a search index of categories that are classified as B (number) .

As shown in Fig. 5 Application Number, Publication Number, International Application Number, International Publication Number, Unexamined Patent Publication Number, Examined Patent Publication Number, Registration Number, Priority Number, Related Application Number, and Number of Appeal are classified under the search index B (number), and text data of category names are recorded in the B (number) type table.

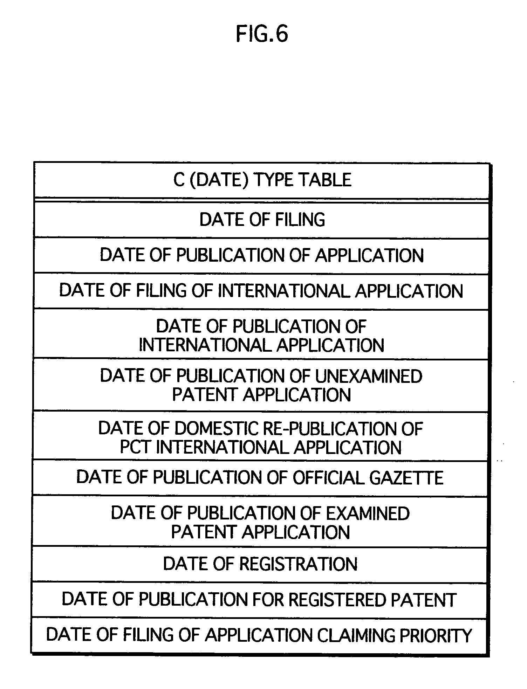

Fig. 6 is an example of a C (date) type table, which is a search index of categories that are classified as C (date).

As shown in Fig. 6, Date of Filing, Date of Publication of Application, Date of Filing of International Application, Date of Publication of International Application, Date of Publication of Unexamined Patent Application, Date of Domestic Re-Publication of PCT International Application, Date of Publication of Official Gazette, Date of Publication of Examined Patent Application, Date of Registration, Date of Publication for Registered Patent, and Date of Filing of Application Claiming Priority are classified under the search index C (date), and text data of category names are recorded in the C (date) type table.

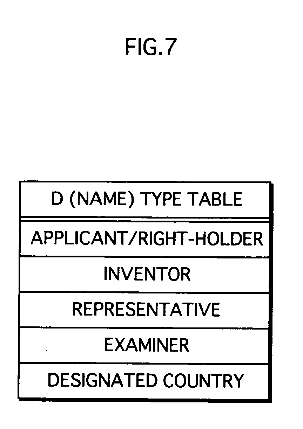

Fig. 7 is an example of a D (name) type table, which is a search index of categories that are classified as D (name).

As shown in Fig. 7, Applicant/ Right-Holder, Inventor, Representative, Examiner, and Designated Country are classified under the search index D (name), and text data of category names are recorded in the D (name) type table.

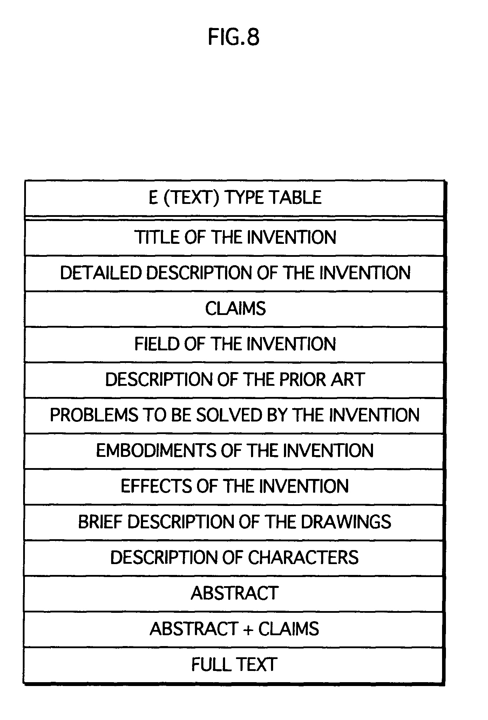

Fig. 8 is an example of an E (text) type table, which is a search index of categories that are classified as E (text) .

As shown in Fig. 8, Title of the Invention, Detailed Description of the Invention, Claim(s), Field of the Invention, Description of the Prior Art, Problem(s) to be Solved by the Invention, Means for Solving the Problem(s), Embodiment of the Invention, Effect of the Invention, Brief Description of the Drawings, Description of Characters, Abstract, Abstract + Claim(s), and Full Text are classified under the search index E (text), and text data of category names are recorded in the E (text) type table.

The patent information data recording unit 12 records the patent information data.

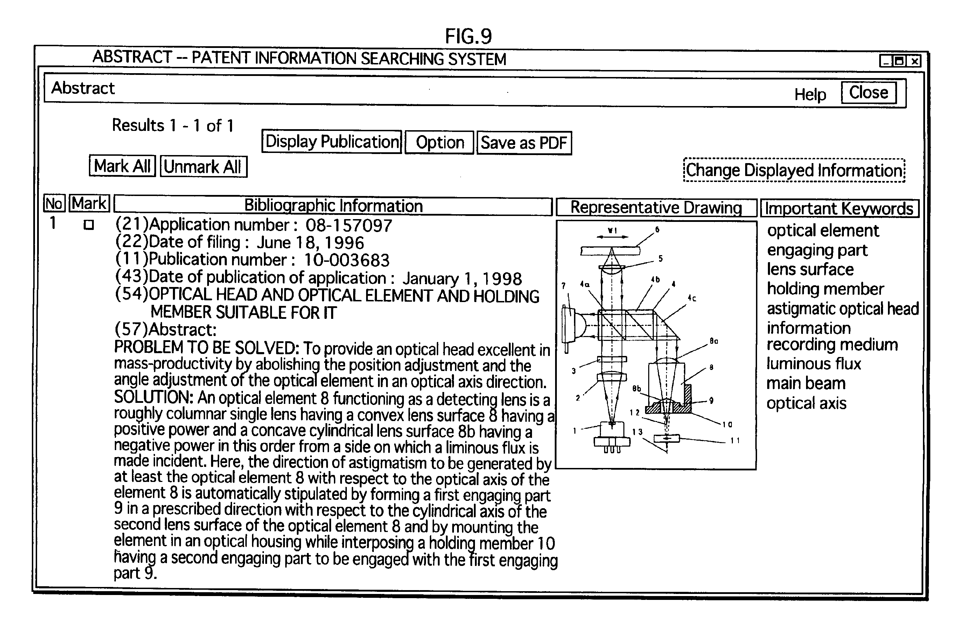

Fig. 9 is an example of a display of a patent publication that is recorded in the patent information data recording unit 12.

The management data recording unit 13 records various kinds of management data.

The management data includes search purpose information and the search category information.

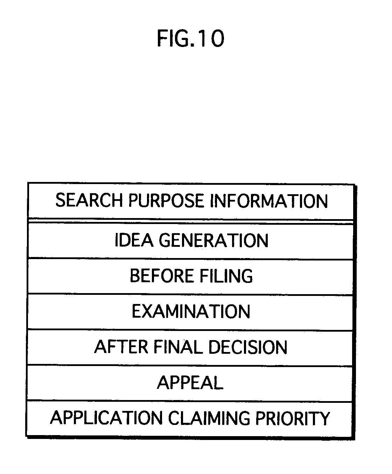

Fig. 10 illustrates an example of the search purpose information that is recorded in the management data recording unit 13.

As shown in Fig. 10, the search purpose information is a list of text data of names of the search purposes according to an order of patent related procedures, such as Idea Generation, Before Filing, Examination, After the Final Decision, Appeal, and Application Claiming Priority.

The search category information is provided for each user ID and for each search purpose, and indicates one or more of a plurality of data-entry fields in which search criteria are entered and that correspond one-to-one with a plurality of search categories structuring the database.

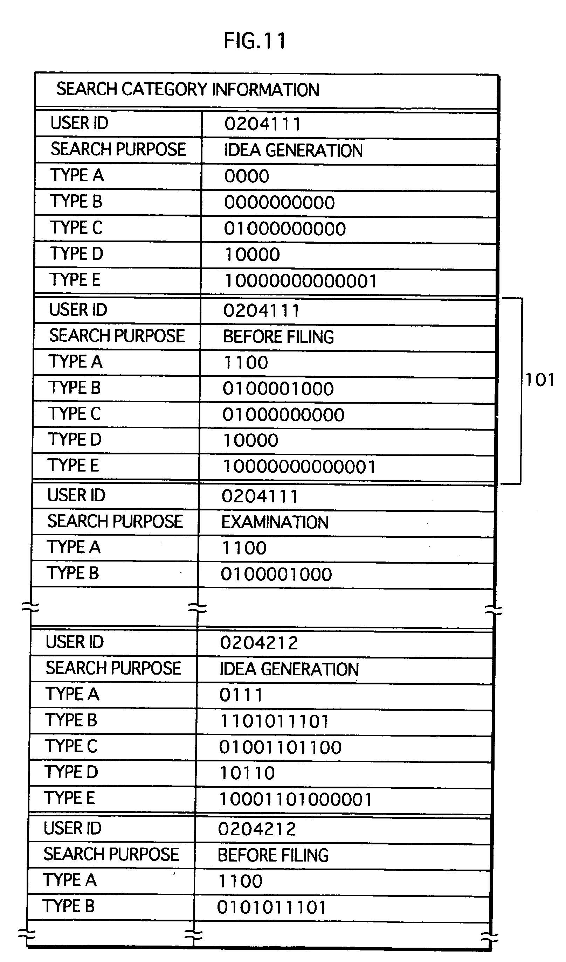

Fig. 11 illustrates an example of the search category information that is recorded in the management data recording unit 13.

As shown in Fig. 11, the search category information is constituted by a user ID, a search purpose, a type, and display flags for respective search categories. When a display flag is 1, it indicates that a corresponding index is to be displayed, and when the display flag is 0, the corresponding index is to be hidden. Search category information 101 in Fig. 11 is an example of the search category information for a user with a user ID "0204111" and the search purpose "Before Filing". The display flags "1100" for A (classification) indicates that the categories Classification by Law and IPC are to be displayed, and the search categories FI and F Term are to be hidden. The display flags "0100001000" for B (number) indicates that the search categories Publication number and Registration Number are to be displayed, and the search categories Application Number, International Application Number, International Publication Number, Unexamined Patent Publication Number, Examined Patent Publication Number, Priority Number, Related Application Number, and Number of Appeal are to be hidden. The display flags "01000000000" for C (date) indicates that the search category Date of Publication of Application is to be displayed, and the search categories Date of Filing, Date of Filing of International Application, Date of Publication of International Application, Date of Publication of Unexamined Patent Application, Date of Domestic Re-Publication of PCT International Application, Date of Publication of Official Gazette, Date of Publication of Examined Patent Application, Date of Registration, Date of Publication for Registered Patent, and Date of Filing of Application Claiming Priority are to be hidden. The display flags "10000" for D (name) indicates that the search category Applicant/Right-Holder is to be displayed, and the search categories Inventor, Representative, Examiner, and Designated Country are to be hidden. The display flags "10000000000001" for E (text) indicates that the search categories Title of the Invention and Full Text are to be displayed, and the search categories Detailed Description of the Invention, Claim(s), Field of the Invention, Description of the Prior Art, Problem(s) to be Solved by the Invention, Means for Solving the Problem(s), Embodiment of the Invention, Effect of the Invention, Brief Description of the Drawings, Description of Characters, Abstract, Abstract + Claim(s) are to be hidden.

The management data recording unit 13 also records search category information for each search purpose for a new user.

Management data that are not described above is not a characteristic part of the present invention, and therefore details are not given here.

The user authentication unit 21 receives the user ID from the user ID input unit 41 and performs a user authentication. When the authentication has been successful, the user ID is passed to the search category obtaining unit 23, and otherwise, the user authentication unit 21 returns that the authentication has failed.

The search purpose setting unit 22 receives the search purpose from the search purpose input unit 42, and passes the received search purpose to the search category obtaining unit 23.

The search category obtaining unit 23 receives the user ID from the user authentication unit 21 and the search purpose from the search purpose setting unit 22, and obtains, from the management data recording unit 13, the search category information corresponding to the received user ID and the received search purpose.

The field display instructing unit 24 generates text data of a name of at least one search index to be actually used, according to the search category information obtained by the search category obtaining unit 23 and using the search index recorded in the search index recording unit 11, and then transmits the generated text data to the Web browser 40 so as to instruct the Web browser 40 to display the name in the transmitted text data and a corresponding data-entry field.

The search category recording unit 25 receives an instruction for changing the search categories from the search category modification unit 44, and records, in the management data recording unit 13, the search categories indicated by the instruction.

A patent information search unit 26 receives a search criterion from the search criterion input unit 45, and retrieves, from the patent information data recording unit 12, patent information that matches the received search criterion, and then transmits the result to the Web browser 40.

The user ID input unit 41 accepts an input of the user ID from the user, and transmits the user ID to the Web server 20. When a return indicates that the user ID has not been authenticated, a message indicating that the authentication was unsuccessful is displayed to the user. When a return indicates that the user ID has been successfully authenticated, the search purpose input unit 42 is prompted to start an operation.

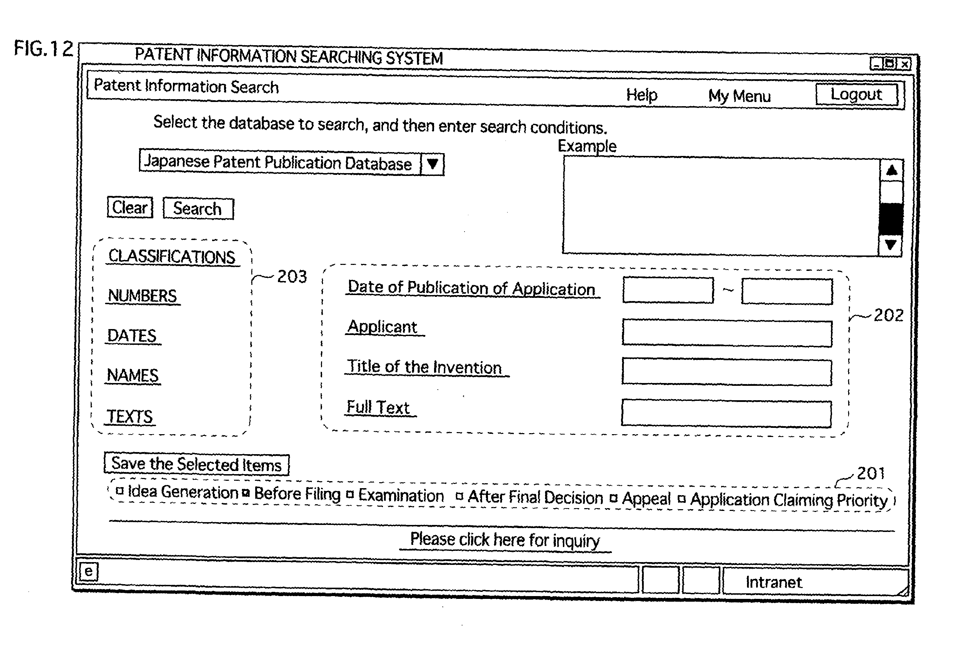

Fig. 12 illustrates an example of screens displayed in the Web browser 40 when the authentication has been successful.

The search purpose input unit 42 displays a list of the search purposes in an order of patent-related procedures so as to prompt the user to select a search purpose, and transmits the selected search purpose to the Web server 20 upon reception of the user selection of the search purpose. As shown in Fig. 12, for example, the search purpose input unit 42 displays a search purpose list 201.

The field display unit 43 receives data-entry field text data and displays the data-entry fields to prompt the user to enter search criteria. As shown in Fig. 12, for example, the field display unit 43 displays data-entry fields 202.

The search category modification unit 44 displays a list of the search categories besides the data-entry fields so as to prompt the user to modify the search categories. Upon reception of the user modification of the search categories, the search category modification unit 44 transmits the modification by the user to the Web server 20 and instructs the field display unit 43 to change the data-entry fields that are displayed.

The search category modification unit 44 includes a type display unit 441, a type accepting unit 442, a category display unit 443, a category accepting unit 444, and an update unit 445.

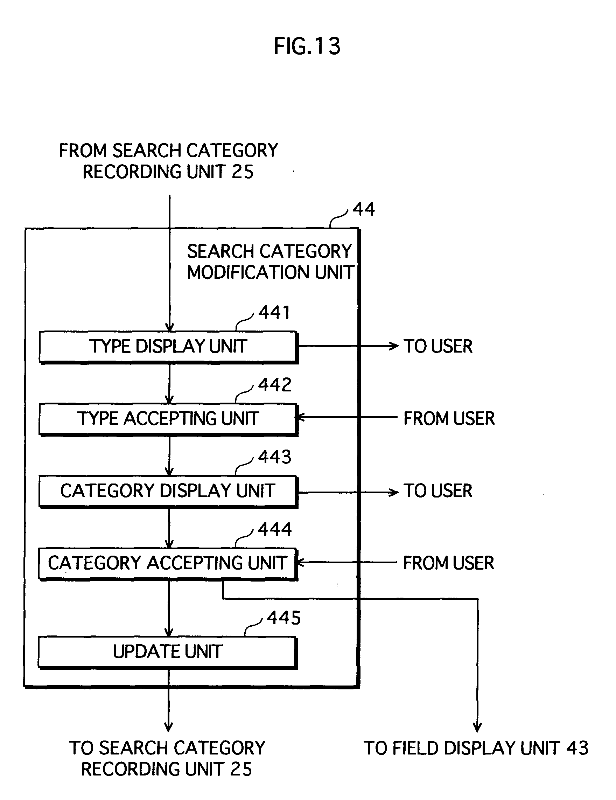

Fig. 13 illustrates a detailed structure of the search category modification unit 44.

The type display unit 441 displays the list of types. As shown in Fig. 12, the type display unit 441 displays a type list 203.

The type accepting unit 442 accepts a selection of a desired type by the user out of the list of types displayed by the type display unit 441.

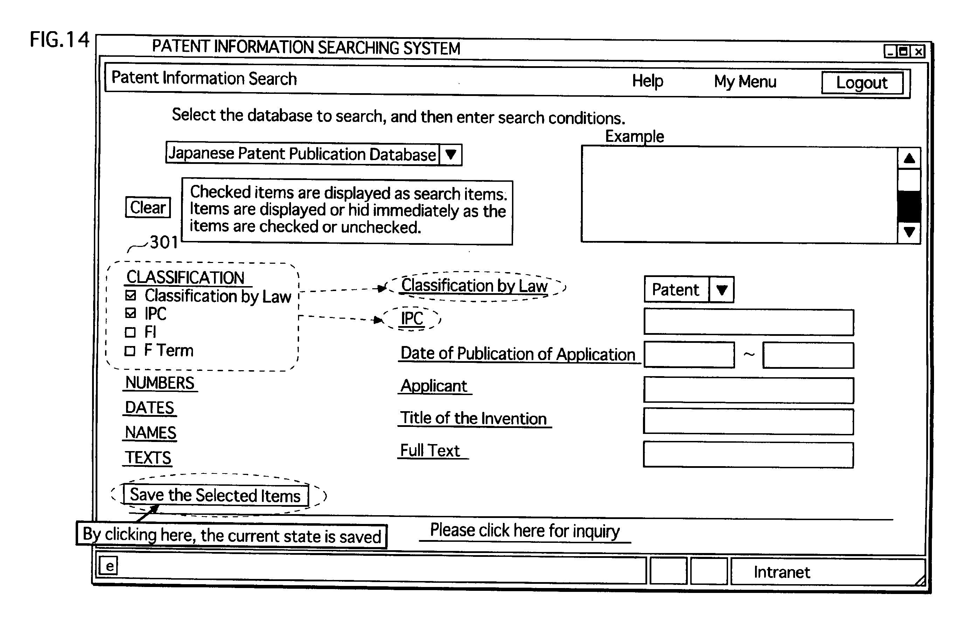

Fig. 14 shows an example of a screen displayed in the Web browser 40 when the user selected A (classification).

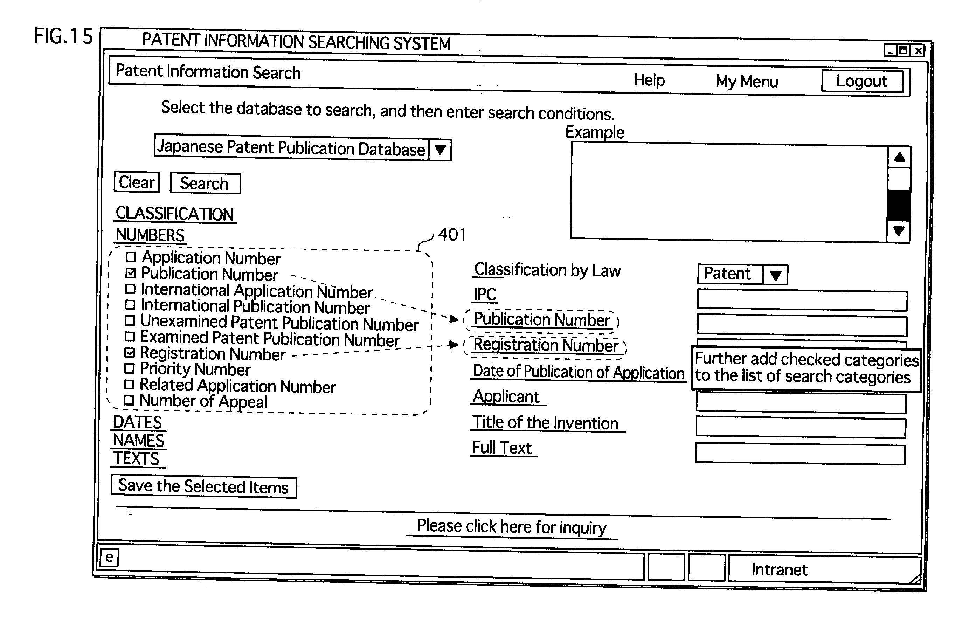

Further, Fig. 15 illustrates an example of a screen displayed in the Web browser 40 when the user selected B (number) .

Upon acceptance of the user selection, the category display unit 443 displays search categories that are classified as the type selected by the user. For example, the category display unit 443 displays a search category list 301 for A (classification) as shown in Fig. 14. For another example, the category display unit 443 displays a search category list 401 for B (number) as shown in Fig. 15.

The category accepting unit 444 accepts a selection of a desired search category by the user from the list of the search categories displayed by the category display unit 443. For example, as shown in Fig. 14, a data-entry field for Classification by Law is added and displayed immediately when the user checks the Classification by Law in the search category list 301 for A (classification), and a data-entry field for IPC is added and displayed immediately when the user checks the IPC. For another example, as shown in Fig. 15, a data-entry field for Publication Number is added and displayed immediately when the user checks the Publication Number in the search category list 401 for B (number), and a data-entry field for Registration Number is added and displayed immediately when the user checks the Registration Number.

When the category accepting unit 444 accepts the selection made by the user and then the user instructed to "save the selected items", the update unit 445 updates the search category information recorded in the management data recording unit 13 based on the user selection.

The search criterion input unit 45 accepts an input of a search criterion by the user, and transmits the accepted search criterion to the Web server 20.

The search result display unit 46 receives a search result from the patent information search unit 26 and displays the result on the screen for the user.

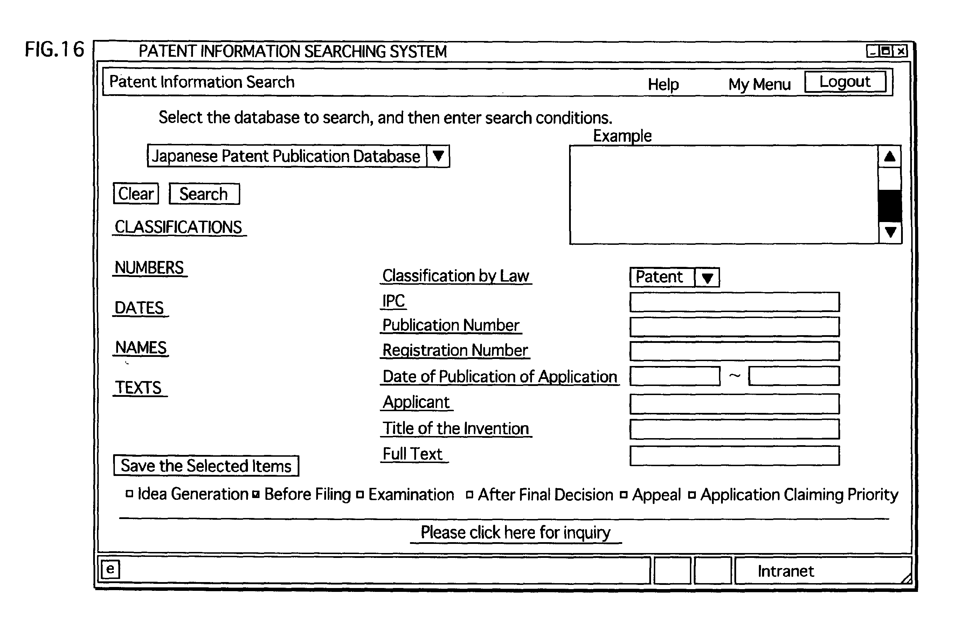

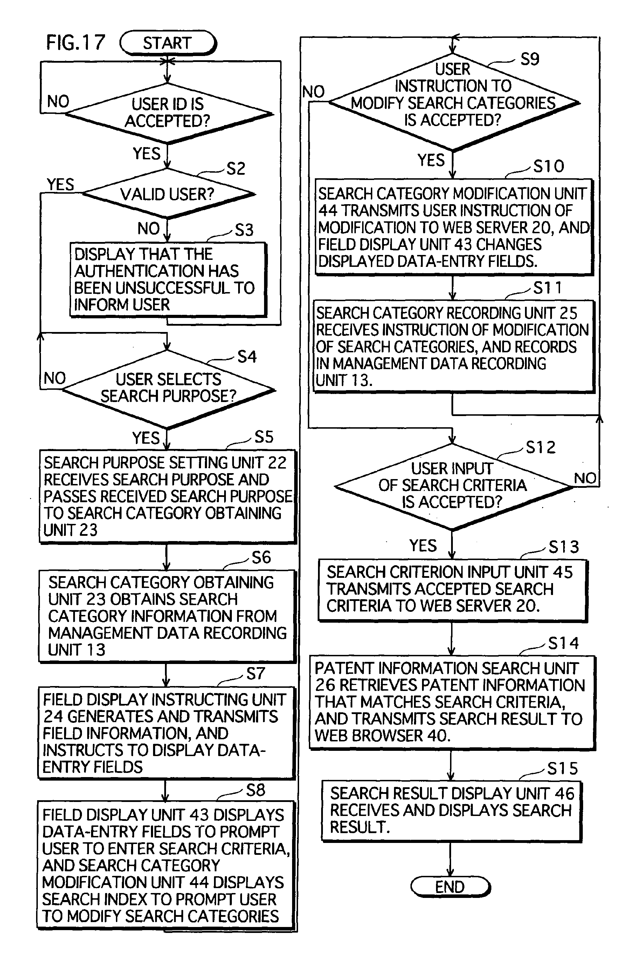

Fig. 16 is an example of a screen displayed in the Web browser 40 when the user starts searching operations for the first time after a couple months.

The screen shown in Fig. 16 is displayed based on the search category information that is registered to the management data recording unit 13 in the searching operations previously performed, by the user selecting Classification by Law, IPC, Publication Number, and Registration Number, and then instructing to "save the selected items". In the case where the searching operations are started during a period in which the search category information is held without being updated, the same data-entry fields as used in the previous searching operations are displayed.

### [Operation]

Fig. 17 is a flowchart showing an operational sequence of searching for a patent publication using the data searching system according to the preferred embodiment of the present invention.

The following describes the operational sequence of searching for a patent publication in accordance with Fig. 17.
(1) On the Web browser 40, the user ID input unit 41 prompts the user to input the user ID. Upon user input of the user ID, the user ID input unit 41 transmits the user ID to the Web server 20 (Step S1).
(2) On the Web server 20, the user authentication unit 21 receives the transmitted user ID and performs the user authentication (Step S2).
(3) When the authentication has been unsuccessful, the user authentication unit 21 returns that the authentication has been failed, and the Web browser 40 displays a message indicating that the authentication was unsuccessful (Step S3).
(4) When the authentication has been successful, the user authentication unit 21 passes the user ID to the search category obtaining unit 23, and returns that the authentication has been successful. Then, on the Web browser 40, the search purpose input unit 42 displays a list of search purposes in an order of the patent-related procedures so as to prompt the user to select a search purpose, and transmits the selected search purpose to the Web server 20 upon reception of the user selection of the search purpose (Step S4).
(5) On the Web server 20, the search purpose setting unit 22 receives the transmitted search purpose and passes the received search purpose to the search category obtaining unit 23 (Step S5).
(6) The search category obtaining unit 23 obtains, from the management data recording unit 13, the search category information corresponding to the transmitted user ID and search purpose (Step S6). When there is no corresponding search category information recorded, the search category information for a new user corresponding to the search purpose is obtained.
(7) The field display instructing unit 24 generates data-entry field text data according to the search category information obtained by the search category obtaining unit 23 and using the search index recorded in the search index recording unit 11. Then the field display instructing unit 24 transmits the generated data-entry field text data to the Web browser 40 to instruct the Web browser 40 to display the data-entry fields (Step S7).
(8) On the Web browser 40, the field display unit 43 receives the data-entry field text data and displays the data-entry fields to prompt the user to input, and the search category modification unit 44 displays the list of the search categories besides the data-entry fields so as to prompt the user to modify the search categories (Step S8).
(9) If the user desires to modify the search categories, the search category modification unit 44 accepts the user instruction to modify the search categories (Step S9).
(10) Upon acceptance of the user instruction to modify the search categories, the search category modification unit 44 transmits the user instruction to the Web server 20, and the field display unit 43 immediately changes displayed data-entry fields according to the user instruction (Step S10).
(11) On the Web server 20, the search category recording unit 25 receives the instruction to modify the search categories, and records the modified search categories in the management data recording unit 13 (Step S11).
(12) When the user does not wish to modi fy the search categories , the search criterion input unit 45 accepts an input of a search criterion by the user (Step S12).
(13) When the input of the search criterion by the user has been accepted, the search criterion input unit 45 transmits the accepted search criterion to the Web server 20 (Step S13) .
(14) On the Web server 20, the patent information search unit 26 receives the transmitted search criterion, and retrieves patent information, from the patent information data recording unit 12, that matches the received search criterion. Then the patent information search unit 26 transmits the search result to the Web browser 40 (Step S14).
(15) On the Web browser 40, the search result display unit 46 receives the search result from the patent information search unit 26, and displays the result on the screen for the user (Step S15).

As explained above, according to the preferred embodiment of the present invention, it is possible to display the data-entry fields according to a different search purpose of a different user. Therefore, the searching operations do not become very complicated and troublesome even when the number of search categories is large.

In the preferred embodiment of the present invention, the data-entry fields are displayed for a different search purpose of a different user. However, the data-entry fields may be displayed for a different Web browser 40, for a different user, or for a different search purpose.

Further, the preferred embodiment of the present invention is explained taking the patent search system as an example. However, the present invention is not limited to a search system for patent information and maybe a search system for any kind of information.

In addition, in the preferred embodiment of the present invention, the external hard disk 10 records the search category information and the search indexes, and the data-entry fields are displayed in the Web browser 40 by the Web server 20 transmitting, to the Web browser 40, the data-entry field text data generated based on the recorded search category information and search indexes. However, the data recorded in the external hard disk 10 may be any kind of data that specifies the data-entry fields to be displayed. For example, the data-entry field text data itself is recorded in the external hard disk 10, and the Web server 20 transmits the data-entry field text data to the Web browser 40.

Moreover, a program having a computer execute the operations described in the preferred embodiment may be recorded in computer readable recording media, and such recording media can be traded in the market. Further, the program can be also traded through distribution via a network and such.

The computer readable recording media here is not restricted to a specific type. Examples of such computer readable recording media include removable recording media such as floppy disks, CDs , MOs , DVDs , and memory cards, as well as non-removable recording media such as hard disks and semiconductor memories.

### Industrial Applicability

The present invention may be applied to all kinds of searching systems that face concerns that a large number of search categories may make the searching operations complicated and troublesome, or may increase adverse effects such as the user entering a keyword in a wrong data-entry field. According to the present invention, it is possible to make the searching operations more efficient, because the searching operations do not become complicated and troublesome even when the number of search categories is large, and the adverse effects such as the user entering a keyword in a wrong data-entry field may be reduced.

The present invention may also be applied to all kinds of searching apparatuses that are designed for users with different characteristics such as learning levels and frequencies of use. According to the present invention, it is possible for each user to have the apparatus record field information according to the user' s own preference, which makes starting of searching operations quick and easy without confusion, even for a user who does not use the searching apparatus very often.

Thus, the present invention has a great deal of potentiality and applicability.

## Claims

1. A data searching apparatus for searching a database based on a search criterion entered in a corresponding data-entry field by a user, the data searching apparatus comprising:
a field information holding unit operable to hold field information indicating one or more of a plurality of data-entry fields that correspond one-to-one with a plurality of search categories structuring the database; and
a field display unit operable to display the one or more data-entry fields indicated by the held field information, and to hide any of the plurality of data-entry fields not indicated by the held field information.

2. A data searching apparatus according to Claim 1, further comprising:
a category accepting unit operable to accept, from the user, a specification of one or more of the plurality of search categories; and
an update unit operable to update the held field information, so as to indicate one or more data-entry fields corresponding to the one or more search categories.

3. A data searching apparatus according to Claim 2, wherein
the field information holding unit is a nonvolatile recording medium, and
when the user performs a database search during a period in which the updated field information is held without further update, the field display unit displays the one or more data-entry fields indicated by the updated field information, and hides any of the plurality of data-entry fields not indicated by the updated field information.

4. A data searching apparatus according to Claim 1, further comprising:
a category display unit operable to display a list of search categories;
a category accepting unit operable to accept, from the user, a selection of one or more search categories from the displayed list of search categories; and
an update unit operable to update the held field information based on the accepted selection, when the selection has been accepted.

5. A data searching apparatus according to Claim 4, wherein
the field display unit updates the displayed data-entry fields immediately when the selection has been accepted.

6. A data searching apparatus according to Claim 1, further comprising:
a type display unit operable to display a list of types into which the plurality of search categories are classified;
a type accepting unit operable to accept, from the user, a selection of a desired type from the displayed list of types;
a category display unit operable to display a list of search categories that are classified as the selected type, when the selection of the type has been accepted;
a category accepting unit operable to accept, from the user, a selection of one or more search categories from the displayed list of search categories; and
an update unit operable to update the field information based on the accepted selection, when the selection of the search categories has been accepted.

7. A data searching apparatus according to Claim 6, wherein
the field display unit updates the displayed data-entry fields immediately when the selection has been accepted.

8. A data searching apparatus according to Claim 1, wherein
the field information holding unit holds pieces of the field information each corresponding to a different user ID,
the apparatus further comprises an ID accepting unit operable to accept a user ID inputted by the user before starting a database search, and
the field display unit displays the data-entry fields indicated by one of the pieces of the field information that corresponds to the accepted user ID.

9. A data searching apparatus according to Claim 1, wherein
the field information holding unit holds pieces of the field information each corresponding to a different search purpose,
the apparatus further comprises a search purpose accepting unit operable to accept a search purpose selected by the user before starting a database search, and
the field display unit displays the data-entry fields indicated by one of the pieces of the field information that corresponds to the accepted search purpose.

10. A data searching apparatus according to Claim 9, wherein
the apparatus is for searching a patent publication database,
each search purpose corresponds to each phase in patent related procedures, and
the search purpose accepting unit includes:
a search purpose display subunit operable to display a list of search purposes in an order of the corresponding phases in the patent related procedures; and
a search purpose accepting subunit operable to accept, from the user, a selection of a desired search purpose from the displayed list of search purposes.

11. A data searching apparatus according to Claim 1, wherein
the field information holding unit holds pieces of the field information each corresponding to a different search purpose of a different user ID,
the apparatus further comprises an ID/purpose accepting unit operable to accept a user ID and a search purpose respectively inputted and selected by the user before starting a database search, and
the field display unit displays the data-entry fields indicated by one of the pieces of the field information that corresponds to the accepted user ID and search purpose.

12. A data searching apparatus according to Claim 9, wherein
the apparatus is for searching a patent publication database,
each search purpose corresponds to each phase in patent related procedures, and
the ID/purpose accepting unit includes:
a search purpose display subunit operable to display a list of search purposes in an order of the corresponding phases in the patent related procedures; and
a search purpose accepting subunit operable to accept, from the user, a selection of a desired search purpose from the displayed list of search purposes.

13. A data searching method for searching a database based on a search criterion entered in a corresponding data-entry field by a user, the data searching method comprising:
a field information holding step of holding field information indicating one or more of a plurality of data-entry fields that correspond one-to-one with a plurality of search categories structuring the database; and
a field display step of displaying the one or more data-entry fields indicated by the held field information, and hiding any of the plurality of data-entry fields not indicated by the held field information.

14. A data searching program for searching a database based on a search criterion entered in a corresponding data-entry field by a user, the data searching program comprising:
a field information holding step of holding field information indicating one or more of a plurality of data-entry fields that correspond one-to-one with a plurality of search categories structuring the database; and
a field display step of displaying the one or more data-entry fields indicated by the held field information, and hiding any of the plurality of data-entry fields not indicated by the held field information.
